# EUROPÄISCHE PATENTSCHRIFT

(11) **EP 1 378 681 B1**
(45) Veröffentlichungstag und Bekanntmachung des Hinweises auf die Patenterteilung: **08.11.2006**
(21) Anmeldenummer: 03012853.2
(22) Anmeldetag: 06.06.2003
(51) Int. Cl.: F16F 9/36

(54) **Dichtungs- und Führungseinheit für einen Zweirohrstossdämpfer oder ein Zweirohrfederbein**
Sealing and guiding unit for a double-tubed damper or shock strut
Unité d'étanchéité et de guidage pour amortisseur ou pour jambe amortisseuse à deux tubes

(30) Priorität: 06.07.2002 DE 10230499
(43) Veröffentlichungstag der Anmeldung: 07.01.2004
(73) Patentinhaber: ThyssenKrupp Bilstein Suspension GmbH, 58256 Ennepetal (DE)
(72) Erfinder: Adrian, Adolf, 58256 Ennepetal (DE); Nevoigt, Andreas, Dr., 58135 Hagen (DE); Feist, Dirk, 44627 Herne (DE); Fabelje, Jürgen, Dipl.-Ing., 58256 Ennepetal (DE)
(74) Vertreter: Adams, Steffen

(56) Entgegenhaltungen:
- DE-A- 3 202 705
- DE-A- 19 702 626
- DE-A- 19 906 044
- DE-B- 1 159 781
- US-A- 5 533 598

## Beschreibung

Die Erfindung betrifft eine Dichtungs- und Führungseinheit für einen Kolbenstangendurchtritt bei einem Zweirohrstoßdämpfer oder einem Zweirohrfederbein nach dem Oberbegriff des Anspruchs 1.

Bei Zweirohrstoßdämpfern, bei denen ein am in den Stoßdämpfer oszillierend eintauchenden Ende der Kolbenstange angeordneter Dämpferkolben gegen ein Innenrohr abdichtend die gewünschte Dämpfungswirkung erzielt, ist zum Ausgleich des variierend eintauchenden Volumens der Kolbenstange am oberen Bereich des Ringraumes ein Gaspolster vorgesehen.

Um insbesondere bei hohen Ein- und Ausfahrgeschwindigkeiten der Kolbenstange eine sichere und störungsfreie Dämpfung zu gewährleisten, ist es üblich, die Dämpfungsflüssigkeit mit einem Druck zu beaufschlagen. Drücke von 3 bis 6 bar sind üblich.

Am oberen Ende wird zur radialen Führung der Kolbenstange gegenüber dem Innenrohr und dem Außenrohr sowie zur Abdichtung nach außen eine so genannte Dichtungs- und Führungseinheit vorgesehen, die eine nach außen liegende Dichtung und eine gegenüber der Dichtung nach innen liegende Führung vorsieht.

Um in die Arbeitskammern, also innerhalb des Innenrohres, gelangte Gasblasen wieder in den Gasraum gelangen zu lassen, ist zwischen der Führung und der Dichtung der Dichtungs- und Führungseinheit ein mit einem Rückschlagventil versehener Kanal zur Verbindung mit dem Gasraum vorgesehen.

Eine derartige Dichtungs- und Führungseinheit ist aus der DE 28 32 640 A1 bekannt. Nachteilig bei dieser Dichtungs- und Führungseinheit ist das Rückschlagventil in der Verbindung zwischen Kolbenstange und Gasraum sehr aufwändig gestaltet. Weiterhin nachteilig ergibt sich bei dieser Ausführung, dass der so genannte Hochdruckdichtring, der zwischen der Stangenführung und der Außendichtung angeordnet ist, Kontakt zur Kolbenstange hat und dadurch Reibung verursacht. Die gleichen Nachteile weist auch die aus der DE 197 02 626 A1 bekannte Dichtungs- und Führungseinheit auf, bei der eine Durchflussblende vor dem durch eine Lippendichtung abgeschlossenen Gaskanal angeordnet ist. Bei der hier gezeigten Dichtungs- und Führungseinheit führt besonders ein Ölabstreifring zu einer erhöhten Reibung an der Kolbenstange.

Der Erfindung liegt die Aufgabe zugrunde, die Bauteile in einer Dichtungs- und Führungseinheit so zu gestalten und anzuordnen, dass ein Hochdruckdichtring mit Kontakt zur Kolbenstange entfallen kann. Darüber hinaus liegt der Erfindung die Aufgabe zugrunde, die Dichtungs- und Führungseinheit derartig zu gestalten, dass das Rückschlagventil im Überlaufkanal einfach aufgebaut ist.

Diese Aufgabe wird durch eine Dichtungs- und Führungseinheit mit den Merkmalen des Anspruchs 1 gelöst.

Die mit der Erfindung erzielten Vorteile bestehen insbesondere darin, dass die Außendichtung aus einem reibungsarmen und verschleißfesten Material besteht und somit in der Zugstufe mit hohem Druck beaufschlagt werden kann. Von daher kann die eigentliche Hochdruckdichtung zwischen dem oberen Dämpferarbeitsraum und der Außendichtung entfallen. Dadurch wird auch die Reibung zwischen Dichtung und Kolbenstange wesentlich verringert, was sich positiv auf das Stick-Slip-Verhalten des Stoßdämpfers auswirkt.

Ein Ausführungsbeispiel der Erfindung ist in der Zeichnung dargestellt und wird im Folgenden näher beschrieben. Es zeigen
Fig. 1 den Schnitt durch einen Zweirohrstoßdämpfer im Bereich der Dichtungs- und Führungseinheit und
Fig. 2 eine vergrößerte Darstellung einer Schnitthälfte der Dichtungs- und Führungseinheit gemäß Fig. 1.

Das Gehäuse eines Zweirohrstoßdämpfers bzw. eines Zweirohrfederbeins (nachfolgend nur noch Zweirohrstoßdämpfer genannt) weist zwei konzentrisch zueinander angeordnete Rohre auf. Es handelt sich um das Außenrohr 1 und das Innenrohr 2. In das obere offene Ende des Stoßdämpfergehäuses taucht oszillierend eine Kolbenstange 3 ein bzw. aus. Am im Stoßdämpfergehäuse liegenden Ende der Kolbenstange 3 ist ein nicht dargestellter Arbeitskolben angeordnet, der abdichtend gegen den Innendurchmesser des Innenrohres 2 den so genannten, mit einer Dämpfungsflüssigkeit gefüllten Arbeitsraum 4 unterteilt und der über ventilbelastete Durchflussöffnungen die Dämpfungskraft erzeugt.

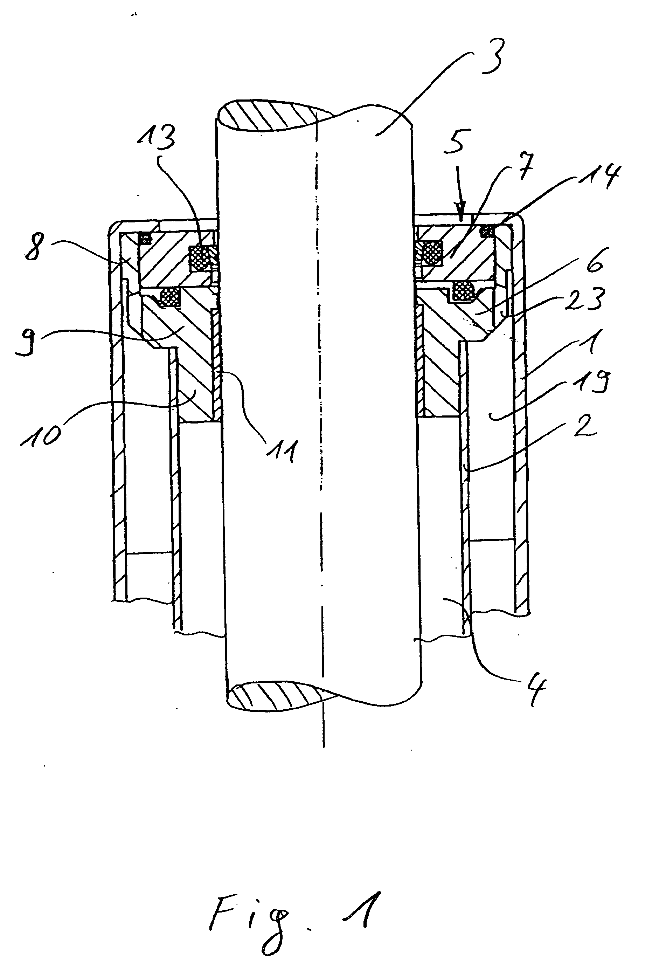

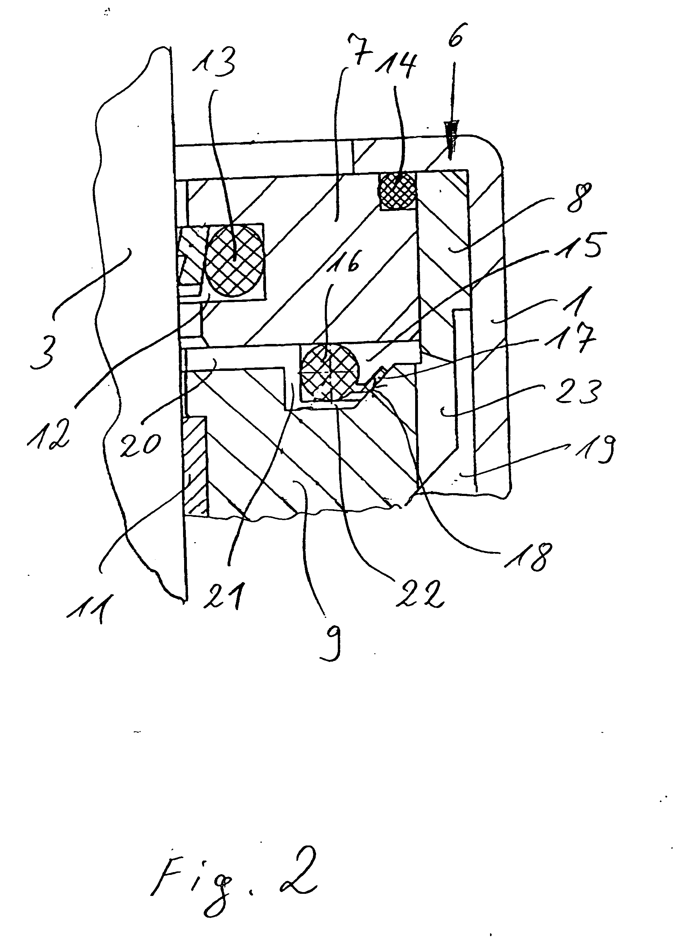

Zur Abdichtung des Stoßdämpfergehäuses gegenüber der oszillierend eintauchenden Kolbenstange 3 und zur radialen Führung dieser Kolbenstange 3 gegenüber dem Stoßdämpfergehäuse ist am oberen Ende von Außenrohr 1 und Innenrohr 2 eine Dichtungs- und Führungseinheit 5 angebracht. Im Ausführungsbeispiel, wie dieses in den Fig. 1 und 2 dargestellt ist, besteht die Dichtungs- und Führungseinheit 5 im Wesentlichen aus einem Führungsring 6 und einer Dichtungsscheibe 7. Der Führungsring 6 weist einen im Halbschnitt etwa Z-förmigen Querschnitt auf. Er liegt am oberen Ende 8 mit seinem Außendurchmesser an der Innenseite des Außenrohres 1 an, verspringt in der Mitte 9 etwa scheibenartig nach innen auf einen Innendurchmesser, der etwa dem Durchmesser der Kolbenstange 3 entspricht und erstreckt sich am unteren Ende 10 axial nach innen, wobei auf dem Außendurchmesser des unteren Endes 10 das Innenrohr 2 aufliegt. Der Führungsring 6 trägt im Ausführungsbeispiel am Innendurchmesser eine Gleitbuchse 11, über die die Kolbenstange 3 radial abgestützt wird. Es ist jedoch auch denkbar, dass sich die Kolbenstange 3 direkt am Innendurchmesser des Führungsringes 6 radial abstützt.

In einer topfartigen Ausnehmung am oberen Ende 8 des Führungsrings 6 ist die Dichtungsscheibe 7 eingelegt. Die Dichtungsscheibe 7 trägt in einer inneren radialen Rille 12 eine mehrteilige Dichtung 13, die die Dichtungs- und Führungseinheit 5 und damit das Stoßdämpfergehäuse gegenüber der Kolbenstange 3 abdichtet. Über eine weitere Dichtung 14 wird die Dichtungs- und Führungseinheit 5 gegenüber dem Außenrohr 1 abgedichtet, das im oberen Endbereich nach innen umgefalzt ausgebildet ist und dadurch die Einbauten des Stoßdämpfers axial hält.

Der Aufbau der Entlüftungsbohrung ist vergrößert in Fig. 2 dargestellt. Am äußeren Umfang des Bodens der topfförmigen Ausnahme des Führungsringes 6 ist eine umlaufende Rille 15 angebracht, die eine spezielle Dichtung 16 aufzunehmen in der Lage ist. Diese Dichtung 16 weist einen etwa kreisförmigen Hauptquerschnitt und eine sich im unteren Bereich radial nach außen erstreckende Dichtlippe 17 auf. Die Dichtlippe 17 liegt in der Ruhelage auf einer Kegelfläche 18 der Rille 15 auf. Die Dichtung 16 wird mit ihrem Hauptquerschnitt in der Rille 15 zwischen Führungsring 6 und Dichtungsscheibe 7 abdichtend eingelegt. Als Entlüftungseinrichtungen, die eine einseitig absperrbare Verbindung zwischen dem Innenraum zwischen Gleitbuchse 11 und Dichtung 13 und dem Gasraum 19 bildet, sind einzelne Kanäle, die nachfolgend näher beschrieben werden, vorgesehen. Der Gasraum 19 befindet sich im oberen Ringraum zwischen Innenrohr 2 und Außenrohr 1. Darunter befindet sich, wie auch im Arbeitsraum 4, Dämpfungsflüssigkeit.

Eventuell zwischen der Gleitbuchse 11 und der Dichtung 13 befindliches Schleppöl oder Gasblasen werden über ein Kanalsystem zum Gasraum 19 hin abgeführt. Das Kanalsystem besteht im Wesentlichen aus sich radial vom Innendurchmesser des Führungsringes 6 zu seinem Außendurchmesser hin erstreckenden Kanälen 20, 21, 22. Diese radialen Kanäle verlaufen nach oben offen im Boden der die Dichtscheibe 7 aufnehmenden Ausnehmung des Führungsringes 6 bzw. im Boden der Rille 15 unterhalb des Hauptquerschnittes der Dichtung 16. Der Kanal 22 erstreckt sich nicht mehr in die Kegelfläche 18, auf der die Dichtlippe 17 aufliegt. Örtliche Durchbrüche 23 verbinden die Rille 15 mit dem Gasraum 19.

Wie aus Fig. 2 ersichtlich, wirkt die Dichtlippe 17 zusammen mit der Kegelfläche 18 als Rückschlagventil und verhindert, dass Gas aus dem Gasraum 19 in den Raum zwischen Gleitbuchse 11 und Dichtung 13 dringt.

Durch die Elastizität und die Ausbildung der Dichtlippe 17, aber auch durch die Variation der Abmessungen der Kanäle 20, 21, 22 oder durch die Anzahl dieser sich radial nach außen erstreckenden Kanäle 20, 21, 22, ist es mit einfachen Mitteln möglich, die Kennung der Entlüftungseinrichtung den Erfordernissen anzupassen. Besonders aber durch die Blendenwirkung des Kanals 22 unterhalb der Dichtung 16 wird erreicht, dass die Dämpferkennungen unabhängig von Fertigungstoleranzen konstant bleiben.

### Bezugszeichenliste

- 1.: Außenrohr
- 2.: Innenrohr
- 3.: Kolbenstange
- 4.: Arbeitsraum
- 5.: Dichtungs- und Führungseinheit
- 6.: Führungsring
- 7.: Dichtungsscheibe
- 8.: oberes Ende
- 9.: Mitte
- 10.: unteres Ende
- 11.: Gleitbuchse
- 12.: Rille
- 13.: Dichtung
- 14.: Dichtung
- 15.: Rille
- 16.: Dichtung
- 17.: Dichtlippe
- 18.: Kegelfläche
- 19.: Gasraum
- 20.: Kanal
- 21.: Kanal
- 22.: Kanal
- 23.: Durchbruch

## Patentansprüche

1. Dichtungs- und Führungseinheit (5) für den Durchtritt einer Kolbenstange (3) bei einem Zweirohrstoßdämpfer oder einem Zweirohrfederbein, wobei die Dichtungs- und Führungseinheit (5) zum Führen und Abdichten der oszillierend in den Stoßdämpferkörper eintauchenden Kolbenstange (3) dient, nach außen wenigstens eine Dichtungsscheibe mit einer Dichtung (13) und zum Innenraum des Stoßdämpferkörpers wenigstens eine einen Führungsring (6) umfassende radiale Führung für die Kolbenstange (3) aufweist und zwischen diesen, zum zwischen Außenrohr (1) und Innenrohr (2) angeordneten Gasraum (19) sich erstreckend, einen mit einem Rückschlagventil versehenen Gaskanal aufweist, der mit Bezug auf den Gasraum (19) vor dem als Lippendichtung ausgebildeten Rückschlagventil eine Durchflussblende (22) aufweist, **dadurch gekennzeichnet, dass** die Lippendichtung als Dichtlippe (17) an einem Rundschnurring mit kreisförmigem Querschnitt und die Durchflussblende durch eine oder mehrere Vertiefungen (22) im Dichtungssitz unter dem Rundschnurring ausgebildet ist.

## Claims

1. Sealing and guiding unit (5) for passage of a piston rod (3) in a two-pipe shock absorber or a two-pipe spring leg, wherein the sealing and guiding unit (5) serves to guide and seal the piston rod (3) passing in an oscillating manner into the shock absorber body, has towards the outside at least one sealing washer with a seal (13) and has towards the inner chamber of the shock absorber body at least one radial guide for the piston rod (3), the radial guide comprising a guide ring (6), and has between these a gas channel provided with a non-return valve, the gas channel extending to the gas chamber (19) disposed between the outer pipe (1) and inner pipe (2) and having a through-flow aperture (22) with respect to the gas chamber (19) upstream of the non-return valve formed as a lip seal, **characterised in that** the lip seal is formed as a sealing lip (17) on a round constricting ring with a circular cross-section and the through-flow aperture is formed by one or a plurality of depressions (22) in the sealing seat below the round constricting ring.

## Revendications

1. Unité d'étanchéité et de guidage (5) pour le passage d'une tige de piston (3) dans un amortisseur à deux tubes ou une jambe de force à deux tubes, l'unité d'étanchéité et de guidage (5) servant à guider et à assurer l'étanchéité de la tige de piston (3) plongeant de manière oscillante dans le corps de l'amortisseur, et présentant, vers l'extérieur, au moins un disque d'étanchéité avec un joint d'étanchéité (13) et, vers l'espace intérieur du corps de l'amortisseur, au moins un dispositif de guidage radial comprenant une bague de guidage (6) pour la tige de piston (3) et, entre ceux-ci, un canal à gaz pourvu d'un clapet de retenue, qui, s'étendant vers la chambre à gaz (19), disposée entre un tube extérieur (1) et un tube intérieur (2), présente un limiteur de débit (22), par rapport à la chambre à gaz (19), en amont du clapet de retenue conçu en tant que lèvre d'étanchéité, **caractérisée en ce que** le joint d'étanchéité à lèvre est conçu en tant que lèvre d'étanchéité (17), sur une bague d'étanchéité, avec une section transversale circulaire, et que le limiteur de débit est formé par une ou plusieurs cavités (22) dans le siège de joint sous la bague d'étanchéité.
